(19) Europäisches Patentamt
European Patent Office
Office européen des brevets

(11) EP 3 347 384 B1

(12) **EUROPEAN PATENT SPECIFICATION**

(45) Date of publication and mention of the grant of the patent:
**25.03.2020 Bulletin 2020/13**

(21) Application number: **16759738.4**

(22) Date of filing: **30.08.2016**

(51) Int Cl.:
***C08F 110/06*** *(2006.01)* ***C08F 4/657*** *(2006.01)*

(86) International application number:
**PCT/EP2016/070389**

(87) International publication number:
**WO 2017/042054 (16.03.2017 Gazette 2017/11)**

(54) **CATALYST FOR THE POLYMERIZATION OF OLEFINS**

KATALYSATOR ZUR POLYMERISIERUNG VON OLEFINEN

CATALYSEUR POUR LA POLYMERISATION DES OLEFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2015 EP 15184570**

(43) Date of publication of application:
**18.07.2018 Bulletin 2018/29**

(73) Proprietor: **Basell Poliolefine Italia S.r.l.**
**20127 Milano (IT)**

(72) Inventors:
- **PIEMONTESI, Fabrizio**
  **44122 Ferrara (IT)**
- **VITALE, Gianni**
  **44122 Ferrara (IT)**
- **LIGUORI, Dario**
  **44122 Ferrara (IT)**
- **MORINI, Giampiero**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2015/135903**
**WO-A1-2015/169831**
**DE-A1- 2 818 642**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 347 384 B1

## Description

FIELD OF THE INVENTION

The present disclosure relates to a catalyst for the (co)polymerization of olefins, in particular propylene, comprising a solid catalyst component comprising Mg, Bi, Ti, and halogen elements, and at least an internal electron donor compound, an alkyl aluminum compound as cocatalyst and an external donor compound having specific chemical structure. The present disclosure further relates to the use of said catalyst in processes for the (co)polymerization of olefins, in particular propylene.

BACKGROUND OF THE INVENTION

Catalyst components for the polymerization of olefins, such as ethylene and propylene, are widely known in the art and they are of the Ziegler-Natta category type. The first catalyst of this type widely used in the industry was based on the use of solid $TiCl_3$ obtained by reduction of $TiCl_4$ with aluminum alkyls. The activity and stereospecificity of the catalysts were not so high so that the polymer had to be subject to a deashing treatment to remove the catalyst residues and to a washing step for removing the atactic polymer (polypropylene) produced. Ziegler-Natta catalysts used industrially comprise a solid catalyst component, constituted by a magnesium dihalide on which are supported a titanium compound and optionally an internal electron donor compound, used in combination with an Al-alkyl compound.

When the ZN catalysts are to be used for propylene polymerization, they contain an internal donor. Moreover, they are used together with an external donor (for example an alkoxysilane) which helps in obtaining higher isotacticity. One of the preferred classes of internal donors is constituted by the esters of phthalic acid, diisobutylphthalate being the most used. The phthalates are used as internal donors in combination with alkylalkoxysilanes as external donor. This catalyst system is capable of giving good performances in terms of activity, and propylene polymers with high isotacticity and xylene insolubility. It is however of general interest the possibility of increasing the intrinsic capability of the solid catalyst components, particularly of those based on donors different from phthalates, to produce stereoregular polymers. In fact, an intrinsically more stereospecific catalyst component would allow to use a lower amount of stereoregulating internal and/or external donor to reach the target of polymer xylene insolubility and this, in turn, would be translated into the possibility of obtaining a higher plant productivity.

Although ZN catalysts can influence the tacticity of the resulting polyolefins, there still exists a need to produce stereoregular polymers which maintain a high isotacticity while having high melt flow rate and a narrower molecular weight distribution. A high melt flow rate will enable a polymer to be easily formed into the intended article. A narrow molecular weight distribution is associated with a polymer having a reduced warpage, a more uniform shrinkage, and an increased elongation at break.

It is described in USP 6,057,407 that high melt flow rate propylene polymers can be obtained by increasing the hydrogen response of a Zigler-Natta catalyst system using a tetraalkylorthosilicate, in particular tetraethylorthosilicate. Propylene polymers obtained using said catalyst system have high melt flow rate but suffer from low stereoregularity, i.e. low isotacticity.

Based on this, it would be very convenient to find a way of improving the stereospecificity of a catalyst system while maintaining a high hydrogen response and in particular it would be convenient that this method be of a wide applicability.

US4,237,254 discloses a catalyst preparation in which a magnesium hydroxychloride support is converted into magnesium chloride based catalyst by reacting it with halogenatings agent such as benzoylchloride. Then the support is comilled with a benzoate as internal donor and treated with $TiCl_4$. It has been found useful to further treat the catalyst with an additional halogenating agent such which can include inorganic compounds like $BiCl_3$. Due to the fact that the comparison runs are not back-to-back, the document does not clarify whether the use of the additional chlorinating agents helps in terms of stereospecificity in connection with the use of benzoates as internal donors. An attempt made by the applicant, demonstrated however that when the use of $BiCl_3$ in the catalyst is associated to the presence of benzoates as internal donors, there is no improvement in activity/stereospecificity.

The applicant has now surprisingly found that when the ZN catalyst contains a certain amount of Bi atoms in combination with certain internal donors and an external donor having specific chemical structure, improvement in stereo specificity is obtained in combination with high MFR when (co)polymerizing alpha-olefins such as propylene.

SUMMARY OF THE INVENTION

It is therefore an object of the present disclosure a catalyst for the (co)polymerization of $CH_2$=CHR olefins, in which R is a hydrocarbyl radical with 1-12 carbon atoms, comprising the product obtained by contacting:

(i) a solid catalyst component comprising Ti, Mg, Cl, and an internal electron donor compound selected from the group consisting of ethers, amines, silanes, carbamates ketones, esters of aliphatic acids, alkyl and aryl esters of optionally substituted aromatic polycarboxylic acids, diol derivatives chosen among monoesters monocarbamates and monoesters monocarbonates and mixtures thereof, wherein said solid catalyst component comprises from 0.1 to 50%wt of Bi with respect to the total weight of said solid catalyst component;
(ii) an alkylaluminum compound and,
(iii) at least one external electron donor compound having the general formula:

$$(R^1)_aSi(OR^2)_b$$

wherein $R^1$ and $R^2$ are independently selected among alkyl radicals with 1-8 carbon atoms, optionally containing heteroatoms, and a is 0 or 1 and a+b=4, with the proviso, that cyclohexyltrimethoxysilane, t-butyltrimethoxysilane and thexyltrimethoxysilane are excluded.

The catalyst of the present disclosure can be used for the (co)polymerization of $CH_2$=CHR olefins, in which R is a hydrocarbyl radical with 1-12 carbon atoms, preferably propylene, optionally in mixture with ethylene.

Therefore, it constitutes a further object of the present disclosure a process for the (co)polymerization of olefins $CH_2$=CHR, in which R is a hydrocarbyl radical with 1-12 carbon atoms, optionally in mixture with ethylene, carried out in the presence of the catalyst as described above.

While multiple embodiments are disclosed, still other embodiments will become apparent to those skilled in the art from the following detailed description. As will be apparent, certain embodiments, as disclosed herein, are capable of modifications in various aspects, without departing from the spirit and scope of the claims as presented herein. Accordingly, the following detailed description is to be regarded as illustrative in nature and not restrictive.

## DETAILED DESCRIPTION OF THE INVENTION

As used herein, the term "alkyl" refers to a linear or branched univalent group having general formula $C_nH_{2n+1}$ in which n is an integer number.

As used herein, the term "substituted" referred to a group indicates a group in which at least one of the hydrogen atoms has been replaced by at least one heteroatom.

As used herein, the term "heteroatom" refers to an atom which is not carbon or hydrogen. Preferably, heteroatoms are selected among halogen, Si, N, O and P.

As used herein, the term "aryl" refers to a group in which at least five carbon atoms are linked to form an aromatic ring optionally bearing hydrocarbon substituents that can be joined to form cyclic structures.

As used therein, the term "(co)polymerize" (or "(co)polymerization") refers both to the homopolymerization and to the copolymerization of $CH_2$=CHR olefins.

Preferably, in the solid catalyst component (i) the content of Bi ranges from 0.5 to 40% more preferably from 0.5 to 35, and even more preferably from 0.5 to 20 or especially from 1 to 20%wt. In another embodiment the content of Bi ranges from 1 to 35, especially from 2 to 25%wt and in very particular embodiment from 2 to 20%wt.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence +3 are preferred. Among Bi halides, preferred are Bi trichloride and Bi tribromide. The most preferred Bi compound is $BiCl_3$.

The particles of the solid catalyst component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg in the solid catalyst component (i) can range from 8 to 30% more preferably from 10 to 25%wt with respect to the total weight of solid catalyst component.

The amount of Ti in the solid catalyst component (i) can range from 0.5 to 5% and more preferably from 0.7 to 3%wt with respect to the total weight of solid catalyst component.
It has been observed that the amount of Ti becomes lower as the amount of Bi increases. As a result, and this is a particular aspect of the present disclosure, the Mg/Ti molar ratio is higher than the corresponding ratio of the catalyst not containing Bi.

The titanium atoms preferably derive from titanium compounds of formula $Ti(OR^3)_nX_{4-n}$ in which n is comprised between 0 and 4; X is halogen and $R^3$ is an hydrocarbon radical, preferably alkyl, radical having 1-10 carbon atoms or a COR group. Among them, particularly preferred are titanium compounds having at least one Ti-halogen bond such as titanium tetrahalides or halogenalcoholates. Preferred specific titanium compounds are $TiCl_4$, and $Ti(OEt)Cl_3$.

The internal electron donor comprised in the solid catalyst component (i) is selected from group consisting of ethers, amines, silanes, carbamates ketones, esters of aliphatic acids, alkyl and aryl esters of optionally substituted aromatic polycarboxylic acids, diol derivatives chosen among monoesters monocarbamates and monoesters monocarbonates and mixtures thereof.

When the internal donor is selected from alkyl and aryl esters of optionally substituted aromatic polycarboxylic acids preferred donors are the esters of phthalic acids. Preferred esters of aliphatic acids are selected from malonic, glutaric, maleic and succinic acids. Specific examples of such esters are n-butylphthalate, diisobutylphthalate (DIBP), and di-n-octylphthalate.

When the internal donor is selected from ethers preferred donors are selected from the 1,3 diethers of the formula:

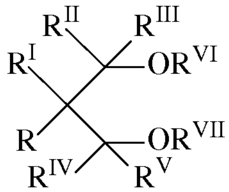

(I)

wherein R, $R^I$, $R^{II}$, $R^{III}$, $R^{IV}$ and $R^V$ equal or different to each other, are hydrogen or hydrocarbon radicals having from 1 to 18 carbon atoms, and $R^{VI}$ and $R^{VII}$, equal or different from each other, have the same meaning of R-$R^V$ except that they cannot be hydrogen; one or more of the R-$R^{VII}$ groups can be linked to form a cycle. The 1,3-diethers in which $R^{VI}$ and $R^{VII}$ are selected from $C_1$-$C_4$ alkyl radicals are particularly preferred.

It is also possible to use mixtures of the above mentioned donors. Specific mixtures are those constituted by esters of succinic acids and 1,3 diethers as disclosed in WO2011/061134.

When it is desired to increase the capability of the catalyst to distribute an olefin co-monomer within a polymer chain, such as in case of production of propylene/ethylene copolymers, it is preferred to choose the internal electron donor among monofunctional donors, chosen among ethers and $C_1$-$C_4$ alkyl esters of aliphatic mono carboxylic acids. Preferred ethers are the $C_2$-$C_{20}$ aliphatic ethers and in particulars cyclic ethers preferably having 3-5 carbon atoms, such as tetrahydrofurane, dioxane. Preferred esters are ethylacetate and methyl formiate. Among them tetrahydrofurane and ethylacetate are the most preferred.

In general, the final amount of internal electron donor compound in the solid catalyst component (i) can range from 0.5 to 40%, preferably in the range from 1 to 35%wt.

It has been observed that also the Mg/internal donor molar ratio is influenced by the presence of Bi and it is generally higher than the corresponding ratio for solid catalyst components not containing Bi.

In case the donor belongs to alkyl and aryl esters of optionally substituted aromatic polycarboxylic acids, in particular phthalates, the Mg/Ti molar ratio is equal to, or higher than, 13, preferably in the range 14-40, and more preferably from 15 to 40. Correspondingly, the Mg/internal donor molar ratio is higher than 16 more preferably higher than 17 and usually ranging from 18 to 50.

In case the internal electron donor belongs to diethers of formula (I) the Mg/Ti molar ratio is higher than 6 preferably higher than 7, while the Mg/internal donor molar ratio ranges typically from 9 to 20 and preferably from 10 to 20.

The preparation of the solid catalyst component (i) can be carried out according to several methods.

According to one of these methods, the magnesium dichloride in an anhydrous state, the titanium compound, the Bi compound and the internal electron donor compounds are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions are mo longer detectable with standard techniques. According to a further method, the product obtained by co-milling the magnesium chloride in an anhydrous state, the titanium compound, the Bi compound and the internal electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. Any Bi compound can be used in the co-milling technique, $BiCl_3$ being the most preferred. When using the milling technique for preparing the catalyst component the final amount of Bi preferably range from 0.1 to 50% by weight.

According to another method, the solid catalyst component (i) can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2{\bullet}pR^4OH$, where p is a number between 0.1 and 6, preferably from 2 to 3.5, and $R^4$ is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating

an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. If used the electron donor compound can be added in the desired ratios during the treatment with $TiCl_4$. In the alternative, as described in WO2004/106388, it can be added as a fresh reactant to the solid intermediate catalyst component obtained by the above described reaction between the adduct and the Ti compound.

Several ways are available to add one or more Bi compounds in the catalyst preparation. According to the preferred option, the at least one Bi compound is incorporated directly into the $MgCl_2 \cdot pR^4OH$ adduct during its preparation. In particular, the at least one Bi compound can be added at the initial stage of adduct preparation by mixing it together with $MgCl_2$ and the alcohol. Alternatively, it can be added to the molten adduct before the emulsification step.

The amount of Bi introduced ranges from 0.1 to 1 mole per mole of Mg in the adduct. Preferred Bi compounds to be incorporated directly into the $MgCl_2 \cdot pR^4OH$ adduct are Bi halides, in particular $BiCl_3$.

According to a specific embodiment, the solid catalyst component (i) comprises a Lewis base adduct comprising $MgCl_2$, an alcohol $R^5OH$ in which $R^5$ is a $C_1$-$C_{10}$ alkyl group, present in a molar ratio with $MgCl_2$ ranging from 0.1 to 6 and one or more Bi compounds in an amount such that the Bi atoms range from 0.1 to 1 mole per mole of Mg. Preferred Bi compounds are Bi halides, in particular $BiCl_3$

The preparation of solid catalyst components (i) in spherical form are described for example in European Patent Applications EP-A-395083, WO98/44009 and WO02/051544.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.3 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

The solid catalyst component has an average particle size ranging from 5 to 120 $\mu$m and more preferably from 10 to 100 $\mu$m.

As mentioned, in any of the preparation methods described above the desired internal electron donor compounds can be added as such or, in an alternative way, can be obtained *in situ* by using an appropriate precursor capable of being transformed in the desired electron donor compound by means, for example, of known chemical reactions such as etherification, alkylation, esterification, transesterification etc.

The solid catalyst component (i) is converted into catalysts for the polymerization of olefins by reacting it with organoaluminum compounds (ii) and at least one external electron donor (iii) according to known methods.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums.

The Al/Ti ratio is higher than 1 and is generally comprised between 50 and 500.

The at least one external electron donor compound (iii) is a silicon compound having the general formula

$$(R^1)_aSi(OR^2)_b$$

wherein $R^1$ and $R^2$ are independently selected among alkyl radicals with 1-8 carbon atoms, optionally containing heteroatoms, wherein a is 0 or 1 and a+b=4. Preferably, when a is 0 $R^2$ groups are independently selected from the alkyl radicals having 2-6, preferably 2-4, carbon atoms.

A first group of preferred silicon compounds of formula (II) are those for which a is 1, b is 3 and $R^1$ and $R^2$ are independently selected among alkyl radicals having 2-6, preferably 2-4, carbon atoms, isobutyl triethoxysilane (iBTES) being particularly preferred.

A further group of preferred silicon compounds of formula (II) are those for which a is 0, b is 4 and $R^2$ are independently selected among alkyl radicals with 2-6, preferably 2-4, carbon atoms, tetraethoxysilane being particularly preferred.

The external electron donor compound (iii) is used in such an amount to give a molar ratio between the organoaluminum compound and said external electron donor compound (iii) of from 0.1 to 200, preferably from 1 to 100 and more preferably from 3 to 50.

The catalyst of the present disclosure can be used for the (co)polymerization of $CH_2$=CHR olefins, in which R is a hydrocarbyl radical with 1-12 carbon atoms, preferably propylene, optionally in mixture with ethylene.

Therefore, it constitutes a further object of the present disclosure a process for the (co)polymerization of olefins $CH_2$=CHR, in which R is a hydrocarbyl radical with 1-12 carbon atoms, optionally in mixture with ethylene, carried out

in the presence of the catalyst as described above.
When the $CH_2$=CHR olefin is propylene, the process of the present disclosure may produce propylene homopolymers and propylene copolymers with ethylene and/or olefin $CH_2$=CHR different from propylene, wherein said propylene copolymers may comprise up to 40wt% of ethylene and/or of olefin $CH_2$=CHR different from propylene, preferably up to 20wt%.

According to a first embodiment, said process is carried out in the presence of a hydrogen feed. Hydrogen is used as a molecular weight regulator.

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors. It is also possible to carry out sequential multistage polymerization process in which the same or different polymerization techniques are used.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa.

As already explained, the catalyst system of the present disclosure show the capability to produce polyolefin, particularly propylene polymers, with high melt flow rate and an increased stereospecificity compared with catalysts prepared under the same conditions but not including Bi atoms. Moreover and also in this case surprisingly, the polymers produced with the catalyst system of the present disclosure show a narrower molecular weight distribution compared to the product obtained with the catalyst system not containing Bi.

In the polymerization conditions indicated in the experimental section, the catalyst of the present disclosure is able to produce polypropylene with an isotacticity, expressed in terms of xylene insolubility, of at least 97% in correspondence with melt flow rate of at least 50.

The following examples are given in order to better illustrate the disclosure without limiting it.

EXAMPLES

**CHARACTERIZATIONS**

**Determination of Mg, Ti**

The determination of Mg and Ti content in the solid catalyst component has been carried out via inductively coupled plasma emission spectroscopy on "I.C.P Spectrometer ARL Accuris".
The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

**Determination of Bi**

The determination of Bi content in the solid catalyst component has been carried out via inductively coupled plasma emission spectroscopy on "I.C.P Spectrometer ARL Accuris".
The sample was prepared by analytically weighting in a 200 $cm^3$ volumetric flask 0.1÷0.3 grams of catalyst. After slow addition of both 10 milliliters of 65% v/v $HNO_3$ solution and 50 $cm^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

**Determination of internal donor content**

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

**Determination of X.I.**

2.5 g of polymer and 250 ml of o-xylene were placed in a round-bottomed flask provided with a cooler and a

reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

**Molecular weight distribution (Mw/Mn)**

Molecular weights and molecular weight distribution were measured at 150°C using a Waters Alliance GPCV/2000 instrument equipped with four mixed-bed columns PLgel Olexis having a particle size of 13 μm. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-di-*tert*-butyl-*p*-cresol were added. 300 μl (nominal value) of solution were injected into the column set. A calibration curve was obtained using 10 polystyrene standard samples (EasiCal kit by Agilent) with molecular weights in the range from 580 to 7 500 000. It was assumed that the K values of the Mark-Houwink relationship were:

$$K = 1.21 \times 10^{-4}\ \mathrm{dl/g}$$

and $\alpha$ = 0.706 for the polystyrene standards,

$$K = 1.90 \times 10^{-4}\ \mathrm{dl/g}$$

and $\alpha$ = 0.725 for the experimental samples.
A third order polynomial fit was used for interpolate the experimental data and obtain the calibration curve. Data acquisition and processing was done by using Waters Empowers 3 Chromatography Data Software with GPC option.

**Melt flow rate (MIL)**

The melt flow rate MIL of the polymer was determined according to ISO 1133 (230°C, 2.16 Kg).

**Polymer microstructure analysis**

The analysis was carried out on xylene insoluble fractions, about 40 mg of polymer were dissolved in 0.5 ml of 1,1,2,2-tetrachloroethane-d2. 13C-NMR spectra were acquired at 120°C on a Bruker AV-600 spectrometer equipped with cryoprobe, operating at 150.91 MHz in the Fourier transform mode. A 90° pulse, 15 seconds of delay between pulses and Composite Pulse Decoupling (CPD, bi_WALTZ_65_64pl sequence) to remove 1H-13C coupling were used. About 512 transients were stored in 64K data points with a spectral window of 9000 Hz. The peak of mmmm pentad in the methyl region at 21.80 ppm was used as internal reference. The tacticity was evaluated from integrals of pentads in the methyl region using the microstructure analysis described in literature ("Studies of the stereospecific polymerization mechanism of propylene by a modified Ziegler-Natta catalyst based on 125 MHz 13C n.m.r. spectra" Y. Inoue, Y. Itabashi, R. Chûjô Polymer, 1984, 25, 1640, and "Two-site model analysis of 13C NMR. of polypropylene polymerized by Ziegler-Natta catalyst with external alkoxysilane donors" R. Chûjô, Y. Kogure, T. Väänänen Polymer, 1994, 35, 339). The experimental pentad distribution was fitted using the two-site model described in the second reference. In Table 2 only the mmmm pentad of the portion of polymer generated from the "asymmetric bernoullian site" defined according to Chûjô is reported.

**Composition of ethylene/propylene copolymers via $^{13}$C NMR analysis**

$^{13}$C NMR spectra were acquired on a Bruker AV-600 spectrometer equipped with cryoprobe, operating at 160.91 MHz in the Fourier transform mode at 120 °C.

The peak of the methyl carbon in *mmmm* pentad was used as internal reference at 21.8 ppm. The samples were dissolved in 1,1,2,2-tetrachloroethane-*d*2 at 120 °C with a 8 % wt/v concentration. Each spectrum was acquired with a 90° pulse, 15 seconds of delay between pulses and CPD (Composite Programmed Decoupling) to remove $^{1}$H-$^{13}$C coupling. 512 transients were stored in 32K data points using a spectral window of 9000 Hz.

The assignments of the spectra was made according to Kakugo (M. Kakugo, Y. Naito, K. Mizunuma and T. Miyatake Macromolecules, 1982, 15, 1150) and the evaluation of triad distribution was evaluated using the following

relations:

| | | |
|---|---|---|
| PPP = 100×[$T_{\beta\beta}$]/S | PPE = 100×[$T_{\beta\delta}$]/S | EPE = 100×[$T_{\delta\delta}$]/S |
| PEP = 100×[$S_{\beta\beta}$]/S | PEE= 100×[$S_{\beta\delta}$]/S | EEE = 100×(0.25 [$S_{\gamma\delta}$]+0.5 [$S_{\delta\delta}$])/S |

Where S = ([$T_{\beta\beta}$] + [$T_{\beta\delta}$] + [$T_{\delta\delta}$] + [$S_{\beta\beta}$] + [$S_{\beta\delta}$] + 0.25 [$S_{\gamma\delta}$] + 0.5 [$S_{\delta\delta}$]) and [$T_{\beta\beta}$], [$T_{\beta\delta}$], [$T_{\delta\delta}$], [$S_{\beta\beta}$], [$S_{\beta\delta}$], [$S_{\gamma\delta}$] and [$S_{\delta\delta}$] are the integrals of the peak regions corresponding to the specific carbon atom (nomenclature according to C. J. Carman, R. A. Harrington and C. E. Wilkes Macromolecules, 1977, 10, 536).
The copolymer composition was obtained from triad distribution as: Ethylene (%mol) = EEE + PEE + PEP. The ethylene %wt was then calculated from the molar composition.

**Procedure for the preparation of the spherical adduct**

Microspheroidal $MgCl_2 \cdot pC_2H_5OH$ adduct was prepared according to the method described in Example 2 of WO98/44009, with the difference that $BiCl_3$ in a powder form and in the amount indicated in Table 1 has been added in the step of molten $MgCl_2$-EtOH adduct preparation. The solid spherical particles obtained, containing 57% of ethanol, underwent a dealcoholation step under warm nitrogen flow until the level of ethanol reached 50% bw.

**Procedure for the preparation of the phthalate-based solid catalyst component**

Into a 500 ml round bottom flask, equipped with mechanical stirrer, cooler and thermometer 300 ml of $TiCl_4$ were introduced at room temperature under nitrogen atmosphere. After cooling to 0°C, while stirring, diisobutylphthalate and 15.0 g of the spherical adduct (prepared as described above) were sequentially added into the flask. The amount of charged internal donor was such to meet a Mg/donor molar ratio of 8. The temperature was raised to 100°C and maintained for 1 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 30 minutes. Stirring was stopped again, the solid was allowed to settle and the supernatant liquid was siphoned off. This last treatment was repeated under identical conditions with the difference that the contact at 120°C lasted 15 minutes. After removal of the liquid phase the solid was washed with anhydrous heptane six times in temperature gradient down to 60°C and one time at room temperature. The obtained solid was then dried under vacuum and analyzed.

**Procedure for the preparation of the glutarate-based solid catalyst component**

Into a 500 ml round bottom flask, equipped with mechanical stirrer, cooler and thermometer, 300 ml of $TiCl_4$ were introduced at room temperature under nitrogen atmosphere. After cooling to 0°C, while stirring, 0.61 g of $BiCl_3$ in a powder form and 15.0 g of the spherical adduct prepared as described above were sequentially added into the flask. The temperature was raised to 40 °C and 1.5 g of diethyl 3,3-dipropylglutarate were added at this temperature (amount of fed internal donor was such to meet a Mg/donor molar ratio = 14). The temperature was raised to 120 °C and maintained for 1 hour. Thereafter, stirring was stopped, the solid product was allowed to settle, and the supernatant liquid was siphoned off at 120 °C. After the liquid was removed, additional 300 mL of fresh $TiCl_4$ and 1.5 g of diethyl 3,3-dipropylglutarate were added. The mixture was then re-heated at 120 °C and kept at this temperature for 30 minutes under stirring. Stirring was stopped again, the solid was allowed to settle and the supernatant liquid was siphoned off at 120 °C. After the liquid was removed, additional 300 ml of fresh $TiCl_4$ was added. The mixture was then heated at 120 °C and kept at this temperature for 15 minutes under stirring. Stirring was stopped again, the solid was allowed to settle and the supernatant liquid was siphoned off at 120 °C. The solid was washed with anhydrous heptane four times at 90 °C and one time with i-hexane at 25 °C. The obtained solid was then dried under vacuum and analyzed.

**General procedure for the polymerization of propylene**

A 4-liter steel autoclave equipped with a stirrer, pressure gauge, thermometer, catalyst feeding system, monomer feeding lines and thermostating jacket, was purged with nitrogen flow at 70°C for one hour. A suspension containing 75 ml of anhydrous hexane, 0.76 g of $AlEt_3$ (6.66 mmol), 0.33 mmol of external donor and 0.006 ÷ 0.010 g of solid catalyst component, previously precontacted for 5 minutes, was charged. Either tetraethoxysilane (TEOS), iso-butyl-triethoxysilane (iBTES) and n-propyl trimethoxysilane (n-PTMS) were used as external donor as specified in Table 2.
The autoclave was closed and the desired amount of hydrogen was added. Then, under stirring, 1.2 kg of liquid propylene

was fed. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. Then the polymer was weighed and characterized.

**General procedure for the copolymerization of ethylene and propylene**

A 4-liter steel autoclave equipped with a stirrer, pressure gauge, thermometer, catalyst feeding system, monomer feeding lines and thermostating jacket, was purged with nitrogen flow at 70 °C for one hour. Then, at 30 °C under propylene flow (0.5 bar), a suspension containing 75 ml of anhydrous hexane, 0.76 g of $AlEt_3$, 0.33 mmol of external donor and 0.004 ÷ 0.010 g of solid catalyst component, previously precontacted for 5 minutes, was charged. The autoclave was closed; subsequently the amount of hydrogen reported in Table 3 was added. Then, under stirring, 1.2 kg of liquid propylene together with the required amount of ethylene (5 g) was fed in about 10-15 minutes during the raising of temperature from 30 °C up to 70 °C. The polymerization was carried out at 70 °C for two hours and ethylene was continuously fed in order to keep the pressure constant. At the end of the polymerization, the non-reacted monomers were removed; the polymer was recovered and dried under vacuum at 70 °C for three hours. Then the polymer was weighed and characterized.

**Examples 1-9 and Comparative Examples C1 - C9: propylene polymerization**

The phthalate-based solid catalyst components of Examples 1-9 were prepared from spherical adducts $MgCl_2 \cdot pC_2H_5OH$ using the general method described above. The phthalate-based solid catalyst component used in comparative examples 1-9 was prepared from a $MgCl_2 \cdot pC_2H_5OH$ prepared according to the general procedure but not containing $BiCl_3$. Their composition and related performance in relation to the propylene polymerization carried out as described in the general procedure are indicated in Tables 1 and 2.

**Table 1: Composition of the solid catalyst component**

| | Support Synthesis | Support Composition | | | Solid Catalyst Component | | | |
|---|---|---|---|---|---|---|---|---|
| | Bi/Mg % mol | Mg %wt. | Bi %wt | EtOH/Mg m.r. | Mg % wt. | Ti %wt. | Bi %wt. | DIBP %wt. |
| Ex. 1-9 | 2.7 | 11.2 | 2.6 | 2.3 | 20.0 | 1.0 | 2.2 | 6.9 |
| Comp. Ex. C1-C9 | -- | 12.5 | - | 2.2 | 18.6 | - | - | 11.7 |

**Table 2: Propylene polymerization**

| | ED | $H_2$ feed | mileage | MIL | XI | Mw/Mn | mmmm |
|---|---|---|---|---|---|---|---|
| | type | mL | Kg/g | g/10' | %wt. | | %wt. |
| Ex. 1 | TEOS | 1500 | 26 | 60 | 97.9 | 5.8 | 95.54 |
| Ex. 2 | TEOS | 3000 | 27 | 150 | 97.7 | 4.7 | 96.65 |
| Ex. 3 | TEOS | 9000 | 28 | 750 | 97.0 | / | / |
| C1 | TEOS | 1500 | 26 | 58 | 95.5 | 6.8 | 94.49 |
| C1 | TEOS | 3000 | 28 | 160 | 96.0 | 4.9 | 95.23 |
| C3 | TEOS | 9000 | 35 | 1000 | 94.2 | / | / |
| Ex.4 | iBTES | 1500 | 24 | 7 | 98.3 | 5.0 | 97.03 |
| Ex.5 | iBTES | 3000 | 31 | 23 | 98.3 | 5.0 | 97.70 |
| Ex.6 | iBTES | 9000 | 46 | 230 | 98.2 | / | / |
| C4 | iBTES | 1500 | 33 | 11 | 96.7 | 5.5 | 95.88 |
| C5 | iBTES | 3000 | 42 | 32 | 97.1 | 4.8 | 96.44 |
| C6 | iBTES | 9000 | 42 | 240 | 97.3 | / | / |
| Ex.7 | nPTMS | 1500 | 24 | 5.1 | 98.4 | / | / |

(continued)

| | ED | $H_2$ feed | mileage | MIL | XI | Mw/Mn | mmmm |
|---|---|---|---|---|---|---|---|
| | type | mL | Kg/g | g/10' | %wt. | | %wt. |
| Ex.8 | nPTMS | 3000 | 25 | 19.6 | 98.2 | / | / |
| Ex.9 | nPTMS | 9000 | 28 | 130 | 97.2 | / | / |
| C7 | nPTMS | 1500 | 24 | 8.4 | 96.9 | / | / |
| C8 | nPTMS | 3000 | 27 | 24.2 | 96.4 | / | / |
| C9 | nPTMS | 9000 | 32 | 240 | 94.0 | / | / |

**Examples 10-12**

The phthalate-based solid catalyst components used in examples 1-9 were employed in the copolymerization of propylene with ethylene carried out as described in the general procedure. The specific conditions relating to hydrogen amount and external donor are reported in Table 3.

**Comparative Example 10**

The phthalate-based solid catalyst component used in Comparative Examples 1-9 was employed in the copolymerization of propylene with ethylene carried out as described in the general procedure. The specific conditions relating to hydrogen amount and external donor are reported in Table 3.

**Examples 13-14**

A glutarate-based solid catalyst component prepared according to the general procedure was employed in the copolymerization of propylene with ethylene carried out according to the described general procedure. The specific conditions relating to hydrogen amount and external donor are reported in Table 3.

**Table 3**

| Example | ED | Hydrogen L | Yield kg/g | C2 %wt | XS %wt | MIL g/10' |
|---|---|---|---|---|---|---|
| 10 | TEOS | 0.8 | 35 | 4.2 | 12.8 | 7 |
| 11 | TEOS | 9.0 | 26 | 3.7 | 11.6 | 600 |
| 12 | IBTES | 9.0 | 54 | 3.9 | 9.1 | 125 |
| C 10. | TEOS | 0.8 | 32 | 3.7 | 16.0 | 8 |
| 13. | TEOS | 9.0 | 39 | 3.5 | 11.3 | 320 |
| 14. | IBTES | 9.0 | 65 | 3.5 | 9.1 | 89 |

## Claims

**1.** A catalyst for the (co)polymerization of $CH_2$=CHR olefins, in which R is a hydrocarbyl radical with 1-12 carbon atoms, comprising the product obtained by contacting:

(i) a solid catalyst component comprising Ti, Mg, Cl, and an internal electron donor compound selected from the group consisting of ethers, amines, silanes, carbamates ketones, esters of aliphatic acids, alkyl and aryl esters of optionally substituted aromatic polycarboxylic acids, diol derivatives chosen among monoesters monocarbamates and monoesters monocarbonates and mixtures thereof, wherein said solid catalyst component comprises from 0.1 to 50%wt of Bi with respect to the total weight of said solid catalyst component;
(ii) an alkyl aluminum compound and,
(iii) at least one external electron donor compound having the formula:

$(R^1)_aSi(OR^2)_b$

wherein $R^1$ and $R^2$ are independently selected among alkyl radicals with 1-8 carbon atoms, optionally containing heteroatoms, and a is 0 or 1 and a+b=4 with the proviso that cyclohexyltrimethoxysilane, t-butyltrimethoxysilane and thexyltrimethoxysilane are excluded.

2. The catalyst according to claim 1, in which the amount of Bi ranges from 0.5 to 40%wt.

3. The catalyst according to claim 1, in which the Bi atoms derive from Bi halides.

4. The catalyst according to claim 1, in which the internal electron donor compound is selected from the group consisting of alkyl and aryl esters of optionally substituted aromatic polycarboxylic acids, esters of malonic acids and esters of glutaric acids.

5. The catalyst according to claim 4, in which the internal donor is selected from alkyl and aryl esters of optionally substituted aromatic polycarboxylic acids, and the Mg/Ti molar ratio is equal to, or higher than, 13 and the Mg/internal donor molar ratio is higher than 16.

6. The catalyst according claim 1, in which the alkyl aluminum compound (ii) is chosen among the trialkyl aluminum compounds.

7. The catalyst according to claim 1 in which in the silicon compound (iii) when a is 0, $R^2$ groups are independently selected from the alkyl radicals having 2-6 carbon atoms.

8. The catalyst according to claim 1, in which the silicon compounds (iii) are those for which a is 1, b is 3 and $R^1$ and $R^2$ are independently selected among alkyl radicals with 2-6 carbon atoms.

9. The catalyst according to claim 7 or 8, in which the $R^1$ and $R^2$ are independently selected among alkyl radicals with 2-4 carbon atoms.

10. The catalyst according to claim 1, in which the silicon compounds are selected from isobutyl triethoxysilane (iBTES) and tetraethoxysilane (TEOS).

11. The catalyst according to claim 1, in which the molar ratio between the alkyl aluminum compound (ii) and the external electron donor compound (iii) ranges from 0.1 to 200, preferably from 1 to 100.

12. A process for the (co)polymerization of olefins $CH_2$=CHR, in which R is a hydrocarbyl radical with 1-12 carbon atoms, optionally in mixture with ethylene, carried out in the presence of the catalyst according to any one of claims 1-11.

13. The process according to claim 12, in which the $CH_2$=CHR is propylene and propylene copolymers are produced, wherein said copolymers comprise up to 40% weight of ethylene and/or of $CH_2$=CHR olefins different from propylene.

14. The process according to claim 12, in which the $CH_2$=CHR is propylene and propylene homopolymers are produced.

15. The process according to claims 12-14 carried out with sequential multistage polymerization process.

**Patentansprüche**

1. Katalysator zur (Co)polymerisation von Olefinen $CH_2$=CHR, wobei R ein Kohlenwasserstoffrest mit 1 bis 12 Kohlenstoffatomen ist, welcher das Produkt umfasst, das erhalten wird durch Kontaktieren von:

(i) einer festen Katalysatorkomponente, die Ti, Mg, Cl und eine interne Elektronendonorverbindung ausgewählt aus der Gruppe bestehend aus Ethern, Aminen, Silanen, Carbamaten, Ketonen, Estern von aliphatischen Säuren, Alkyl- und Arylestern von gegebenenfalls substituierten aromatischen Polycarbonsäuren, Diolderivaten ausgewählt aus Monoestern-Monocarbamaten und Monoestern-Monocarbonaten und Mischungen davon umfasst, wobei die feste Katalysatorkomponente 0,1 bis 50 Gew.% Bi umfasst, bezogen auf das Gesamtgewicht

der festen Katalysatorkomponente;
(ii) einer Alkylaluminiumverbindung und
(iii) mindestens einer externen Elektronendonorverbindung mit der Formel:

$$(R^1)_aSi(OR^2)_b$$

wobei $R^1$ und $R^2$ unabhängig ausgewählt sind aus Alkylresten mit 1 bis 8 Kohlenstoffatomen, die gegebenenfalls Heteroatome enthalten, und wobei a 0 oder 1 ist, und a+b=4, mit der Maßgabe, dass Cyclohexyltrimethoxysilan, t-Butyltrimethoxysilan und t-Hexyltrimethoxysilan ausgeschlossen sind.

**2.** Katalysator nach Anspruch 1, bei dem die Menge an Bi im Bereich von 0,5 bis 40 Gew.% liegt.

**3.** Katalysator nach Anspruch 1, wobei die Bi-Atome von Bi-Halogeniden abgeleitet sind.

**4.** Katalysator nach Anspruch 1, wobei die interne Elektronendonorverbindung ausgewählt ist aus der Gruppe bestehend aus Alkyl- und Arylestern von gegebenenfalls substituierten aromatischen Polycarbonsäuren, Estern von Malonsäuren und Estern von Glutarsäuren.

**5.** Katalysator nach Anspruch 4, wobei der interne Donor ausgewählt ist aus Alkyl- und Arylestern von gegebenenfalls substituierten aromatischen Polycarbonsäuren, und das Molverhältnis von Mg zu Ti gleich oder höher als 13 ist, und das Molverhältnis von Mg zu internem Donor höher als 16 ist.

**6.** Katalysator nach Anspruch 1, wobei die Alkylaluminiumverbindung (ii) ausgewählt ist aus den Trialkylaluminiumverbindungen.

**7.** Katalysator nach Anspruch 1, wobei in der Siliciumverbindung (iii), wenn a 0 ist, die Gruppen $R^2$ unabhängig ausgewählt sind aus den Alkylresten mit 2 bis 6 Kohlenstoffatomen.

**8.** Katalysator nach Anspruch 1, wobei die Siliciumverbindungen (iii) jene sind, bei denen a 1 ist, b 3 ist, und $R^1$ und $R^2$ unabhängig ausgewählt sind aus Alkylresten mit 2 bis 6 Kohlenstoffatomen.

**9.** Katalysator nach Anspruch 7 oder 8, wobei $R^1$ und $R^2$ unabhängig ausgewählt sind aus Alkylresten mit 2 bis 4 Kohlenstoffatomen.

**10.** Katalysator nach Anspruch 1, wobei die Siliciumverbindungen ausgewählt sind aus Isobutyltriethoxysilan (iBTES) und Tetraethoxysilan (TEOS).

**11.** Katalysator nach Anspruch 1, wobei das Molverhältnis zwischen der Alkylaluminiumverbindung (ii) und der externen Elektronendonorverbindung (iii) im Bereich von 0,1 bis 200, vorzugsweise 1 bis 100 liegt.

**12.** Verfahren für die (Co)polymerisation von Olefinen $CH_2$=CHR, wobei R ein Kohlenwasserstoffrest mit 1 bis 12 Kohlenstoffatomen ist, gegebenenfalls gemischt mit Ethylen, welches in Gegenwart eines Katalysators gemäß einem der Ansprüche 1 bis 11 durchgeführt wird.

**13.** Verfahren nach Anspruch 12, wobei das $CH_2$=CHR Propylen ist, und Propylencopolymere produziert werden, wobei die Copolymere bis zu 40 Gew.% Ethylen und/oder Olefine $CH_2$=CHR umfassen, die von Propylen verschieden sind.

**14.** Verfahren nach Anspruch 12, wobei das $CH_2$=CHR Propylen ist, und Propylenhomopolymere produziert werden.

**15.** Verfahren nach den Ansprüchen 12 bis 14, das mit einem sequentiellen mehrstufigen Polymerisationsverfahren durchgeführt wird.

## Revendications

**1.** Catalyseur pour la (co)polymérisation d'oléfines $CH_2$=CHR, où R représente un radical hydrocarbyle comprenant 1-12 atomes de carbone, comprenant le produit obtenu par mise en contact de :

(i) un constituant catalytique solide comprenant Ti, Mg, C1 et un composé donneur d'électrons interne choisi dans le groupe constitué par les éthers, les amines, les silanes, les carbamates, les cétones, les esters d'acides aliphatiques, les esters alkyliques et aryliques d'acides polycarboxyliques aromatiques éventuellement substitués, les dérivés diol choisis parmi les monoesters-monocarbamates et les monoesters-monocarbonates et leurs mélanges, ledit constituant catalytique solide comprenant 0,1 à 50% en poids de Bi par rapport au poids total dudit constituant catalytique solide ;
(ii) un composé d'alkylaluminium et
(iii) au moins un composé donneur d'électrons externe présentant la formule :

$$(R^1)_aSi(OR^2)_b$$

dans laquelle $R^1$ et $R^2$ sont indépendamment choisis parmi les radicaux alkyle comprenant 1 à 8 atomes de carbone, contenant éventuellement des hétéroatomes et a vaut 0 ou 1 et a+b=4, à condition que le cyclohexyltriméthoxysilane, le t-butyltriméthoxysilane et le t-hexyltriméthoxysilane soient exclus.

**2.** Catalyseur selon la revendication 1, dans lequel la quantité de Bi est située dans la plage de 0,5 à 40% en poids.

**3.** Catalyseur selon la revendication 1, dans lequel les atomes de Bi sont issus d'halogénures de Bi.

**4.** Catalyseur selon la revendication 1, dans lequel le composé donneur d'électrons interne est choisi dans le groupe constitué par les esters alkyliques et aryliques d'acides polycarboxyliques aromatiques éventuellement substitués, les esters d'acides maloniques et les esters d'acides glutariques.

**5.** Catalyseur selon la revendication 4, dans lequel le donneur interne est choisi parmi les esters alkyliques et aryliques d'acides polycarboxyliques aromatiques éventuellement substitués et le rapport molaire Mg/Ti est égal ou supérieur à 13 et le rapport molaire Mg/donneur interne est supérieur à 16.

**6.** Catalyseur selon la revendication 1, dans lequel le composé d'alkylaluminium (ii) est choisi parmi les composés de trialkylaluminium.

**7.** Catalyseur selon la revendication 1, dans lequel, dans le composé de silicium (iii), lorsque a vaut 0, les groupes $R^2$ sont indépendamment choisis parmi les radicaux alkyle comprenant 2 à 6 atomes de carbone.

**8.** Catalyseur selon la revendication 1, dans lequel les composés de silicium (iii) sont ceux pour lesquels a vaut 1, b vaut 3 et $R^1$ et $R^2$ sont indépendamment choisis parmi des radicaux alkyle comprenant 2 à 6 atomes de carbone.

**9.** Catalyseur selon la revendication 7 ou 8, dans lequel $R^1$ et $R^2$ sont indépendamment choisis parmi les radicaux alkyle comprenant 2 à 4 atomes de carbone.

**10.** Catalyseur selon la revendication 1, dans lequel les composés de silicium sont choisis parmi l'isobutyltriéthoxysilane (iBTES) et le tétraéthoxysilane (TEOS).

**11.** Catalyseur selon la revendication 1, dans lequel le rapport molaire entre le composé d'alkylaluminium (ii) et le composé donneur d'électrons externe (iii) est situé dans la plage de 0,1 à 200, préférablement de 1 à 100.

**12.** Procédé pour la (co)polymérisation d'oléfines $CH_2$=CHR, dans lequel R représente un radical hydrocarbyle comprenant de 1 à 12 atomes de carbone, éventuellement en mélange avec de l'éthylène, mis en œuvre en présence du catalyseur selon l'une quelconque des revendications 1 à 11.

**13.** Procédé selon la revendication 12, dans lequel $CH_2$=CHR représente propylène et des copolymères de propylène sont produits, lesdits copolymères comprenant jusqu'à 40% en poids d'éthylène et/ou d'oléfines $CH_2$=CHR différentes du propylène.

**14.** Procédé selon la revendication 12, dans lequel $CH_2$=CHR représente propylène et des homopolymères de propylène sont produits.

**15.** Procédé selon les revendications 12 à 14, mis en œuvre par un procédé de polymérisation séquentiel à plusieurs étages.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6057407 A
- US 4237254 A
- WO 2011061134 A
- US 4399054 A
- US 4469648 A
- WO 2004106388 A
- EP 395083 A
- WO 9844009 A
- WO 02051544 A


### Non-patent literature cited in the description


- **Y. INOUE ; Y. ITABASHI ; R. CHÛJÔ.** Studies of the stereospecific polymerization mechanism of propylene by a modified Ziegler-Natta catalyst based on 125 MHz 13C n.m.r. spectra. *Polymer,* 1984, vol. 25, 1640
- **R. CHÛJÔ ; Y. KOGURE ; T. VÄÄNÄNEN.** Two-site model analysis of C NMR. of polypropylene polymerized by Ziegler-Natta catalyst with external alkoxysilane donors. *Polymer,* 1994, vol. 35, 339
- **M. KAKUGO ; Y. NAITO ; K. MIZUNUMA ; T. MIYATAKE.** *Macromolecules,* 1982, vol. 15, 1150
- **C. J. CARMAN ; R. A. HARRINGTON ; C. E. WILKES.** *Macromolecules,* 1977, vol. 10, 536